# EUROPÄISCHE PATENTSCHRIFT

(11) **EP 3 029 340 B1**
(45) Veröffentlichungstag und Bekanntmachung des Hinweises auf die Patenterteilung: **03.05.2017**
(21) Anmeldenummer: 14195605.2
(22) Anmeldetag: 01.12.2014
(51) Int. Cl.: F16B 37/12

(54) **Gewindehülse**
Thread cylinder
Douille filetée

(43) Veröffentlichungstag der Anmeldung: 08.06.2016
(73) Patentinhaber: RAMPA Verbindungstechnik GmbH & Co. KG, 21493 Schwarzenbek (DE)
(72) Erfinder: Färber, Wolfgang, 21493 Schwarzenbek (DE)
(74) Vertreter: RGTH

(56) Entgegenhaltungen:
- EP-A2- 2 497 962
- DE-U1- 20 001 429
- US-A- 2 742 074

## Beschreibung

Die Erfindung betrifft eine Gewindehülse zum Eindrehen in eine Aufnahmeöffnung eines Werkstücks.

Es sind Gewindehülsen mit einem Kern und einem außen auf diesem angebrachten Gewinde aus dem Stand der Technik bekannt (siehe z.B. EP-A 2 497 962). Als Nachteil der bekannten

Gewindehülsen hat sich herausgestellt, dass beim Eindrehen der Gewindehülse in ein Werkstück diese kippt und die Gewindehülse schräg montiert wird. Daher wird die notwendige Vorbohrung häufig größer ausgeführt, was dazu führt, dass keine genügende Zugfestigkeit der Verbindung zwischen Gewindehülse und Werkstück hergestellt werden kann. Dies liegt daran, dass bei erfolgreicher Montage der Gewindehülse, sich das Außengewinde nicht ausreichend tief in das umgebende Werkstück verankert hat.

Bei einer schiefen Montage der Gewindehülsen im Werkstück kommt es häufig zu Rissbildungen, Erhitzung des Werkstücks oder deren Verformung. Des Weiteren können asymmetrischen Spannungsverteilung und Belastungen im Werkstück zur dessen Bruch oder Zerstörung führen.

Es ist Aufgabe der vorliegenden Erfindung, eine Gewindehülse anzugeben, bei der der Eindrehvorgang erleichtert, die Montage sicher senkrecht zum Werkstück erfolgt und nach dem Eindrehen eine stabile und belastbare Verbindung zwischen Gewindehülse und Werkstoff gewährleistet ist.

Die oben genannte Aufgabe wird durch eine Gewindehülse mit den Merkmalen des Anspruchs 1 gelöst.

Erfindungsgemäß ist die Gewindehülse zum Eindrehen in eine Aufnahmeöffnung eines Werkstücks geeignet. Die Gewindehülse umfasst einen Kern und ein auf der Außenoberfläche des Kerns angebrachtes Gewinde. Das Gewinde umfasst drei Gewindegänge mit demselben Gewindeprofil. Das Gewindeprofil der Gewindehülse weist einen Flankenwinkel von 25° bis 35° auf, wobei die Steigung des Gewindes bei einem Außendurchmesser von 8 mm bis 14 mm das 0,5-bis 1,0-fache und bei einem Außendurchmesser von größer als 14 mm bis 40 mm das 0,25- bis 0,65-fache des Außendurchmessers der Gewindehülse beträgt, und wobei die Gewindetiefe des Gewindes das 0,03-fache bis 0,15-fache des Außendurchmessers der Gewindehülse beträgt.

Insbesondere besteht die Gewindehülse aus einem Kern und einem an dessen Oberfläche angebrachten Gewinde. Das Gewinde erstreckt sich bevorzugterweise über einen Großteil der Länge der Gewindehülse, insbesondere über im Wesentlichen die gesamte Länge der Gewindehülse. Dabei kann ein Bereich an einem Ende der Gewindehülse zum leichten Einsetzen und Führen der Gewindehülse ausgespart sein. Dieser Bereich wird in dieser Anwendung als Führungsansatz bezeichnet. Die Länge dieses Bereich in Längsrichtung der Gewindehülse beträgt insbesondere höchstens 15 %, ferner bevorzugt höchstens 10 %, der Länge der Gewindehülse.

Eine Gewindehülse wird auch als Muffe oder Gewindebuchse bezeichnet.

Die Gewindehülse ist zum Eindrehen in die Aufnahmeöffnung eines Werkstücks ausgebildet. Die Aufnahmeöffnung des Werkstücks, in die die Gewindehülse eingedreht werden soll, kann beispielsweise als Bohrung ausgebildet sein. Dabei weist die Aufnahmeöffnung des Werkstücks bevorzugterweise kein eigenes Gewinde auf. Insbesondere weist das Werkstück eine Innenwand auf, die die Aufnahmeöffnung begrenzt. Die Innenwand des Werkstücks ist bevorzugterweise glattwandig ausgebildet.

Bei der Verarbeitung der Gewindehülse wird zunächst der Führungsansatz in die Aufnahmeöffnung geführt. Durch den gleichmäßigen Kontakt der drei Gewindeansätze mit dem Werkstück kann die Gewindehülse nicht mehr seitlich kippen. Durch das Eindrehen, d. h. eine Drehung um die Längsachse der Gewindehülse, wird die Gewindehülse in die Aufnahmeöffnung eines Werkstücks eingebracht. Das Gewinde der Gewindehülse formt beim Eindrehen in eine Aufnahmeöffnung insbesondere ein Gewinde bzw. Gegengewinde in der (glattwandigen) Innenwand der Aufnahmeöffnung.

Grundsätzlich kann die Gewindehülse zum Eindrehen in die Aufnahmeöffnung eines Werkstücks jeglicher Art verwendet werden.

Die besonders effektive Schneidwirkung der vorliegenden Gewindehülse wird unter anderem durch den sehr kleinen Flankenwinkel des Gewindeprofiles, der im Bereich zwischen 25° und 35° liegt, erreicht. Das Gewindeprofil ist der im Querschnitt gebildete Umriss eines Gewindeganges des Gewindes. Unter dem Flankenwinkel versteht man denjenigen Winkel, der von den das Gewindeprofil formenden Flanken eingeschlossen wird.

Durch die Wahl eines kleinen Flankenwinkels wird eine bessere Schneidwirkung zum Einschneiden in die, bevorzugterweise glattwandige, die Aufnahmeöffnung begrenzende Innenwand des Aufnahmestücks erreicht, woraus ein niedrigeres benötigtes Drehmoment beim Eindrehen der Gewindehülse resultiert. Das Gewinde der Gewindehülse verdrängt, verpresst oder verdichtet das Material des Werkstücks nicht, sondern schneidet es, wobei eine ausreichende Stabilität des Flankenwinkels gewährleistet sein muss, damit die Belastbarkeit auf Zug weiterhin erhalten bleibt. Folglich wird die Gewindehülse senkrecht montiert und die wesentlich geringeren Kräfte auf den umgebenden Werkstoff verhindern eine Verformung bzw. Zerstörung des Materials. Die zuverlässige gerade Verarbeitung erlaubt eine nur unwesentlich größere Aufnahmebohrung als der Kerndurchmesser der Gewindehülse und damit eine tiefere Montage des Außengewindes in den umgebenden Werkstoff. Insgesamt entsteht demnach eine erheblich erhöhte Zugfestigkeit der Verbindung. Ferner wird durch den kleinen Flankenwinkel der Eindrehwiderstand verringert, sodass sich die Gewindehülse leichter, und damit mit einfacheren Werkzeugen, montieren lässt.

Ferner ist das Gewinde der erfindungsgemäßen Gewindehülse dreigängig ausgebildet. Bevorzugterweise weist das Gewinde drei Gewindegänge auf. Insbesondere weist die Gewindehülse drei Gewindeanfänge in mindestens einem Endbereich der Gewindehülse auf. Diese Gewindegänge sind insbesondere in einem radialen Abstand von 120° zueinander auf dem Kern der Gewindehülse angebracht. Insbesondere verlaufen die Gewindegänge über die gesamte Länge der Gewindehülse äquidistant zueinander. Jeder der Gewindegang verläuft bevorzugterweise über dieselbe Länge der Gewindehülse, wobei diese Länge bevorzugterweise einen Großteil der Länge, insbesondere im Wesentlichen die gesamte Länge, der Gewindehülse beträgt. Der Bereich des Führungsansatzes an einem Ende der Gewindehülse kann zum leichten Einsetzen der Gewindehülse ausgespart sein.

Durch die dreigängige Ausbildung des Gewindes ist die Gewindehülse besonders effektiv in Werkstücke einzudrehen, da durch die wesentlich höhere Gewindesteigung der Gewindegänge -gegenüber einfach ausgeführten Gewinden- die Gewindehülse pro Umdrehung wesentlich weiter in das Werkstück eindringen lassen. So kann eine vielmals erhöhte Verarbeitungsgeschwindigkeit der Gewindehülse erreicht werden.

Außerdem weist die erfindungsgemäße Gewindehülse eine sehr große Steigung, und zwar bei einem Außendurchmesser von 8 mm bis 14 mm das 0,5- bis 1,0-fache und bei einem Außendurchmesser von größer als 14 mm bis 40 mm das 0,25- bis 0,65-fache des Außendurchmessers der Gewindehülse, auf. Unter dem Begriff Steigung versteht man den längsachsenparallelen Abstand zwischen der Mitte zweier aufeinander folgender Gewindegangabschnitte desselben Gewindeganges. Dadurch, dass das Gewinde dreigängig ausgebildet ist, sind diese aufeinander folgenden Gewindegangabschnitte nicht benachbart zueinander angeordnet, so wie dies bei eingängigen Gewinden der Fall ist, sondern es liegen Gewindegangabschnitte der beiden anderen Gewindegänge dazwischen. Die Steigung ist als die Distanz zu verstehen, die sich die Gewindehülse bei einmaliger Drehung derselben um 360° in ein Material dreht.

Bei der Dimensionierung der Gewindesteigung von Gewindehülsen ist grundsätzlich darauf zu achten, dass diese so zu dimensionieren sind, dass die wirkenden Auszugskräfte nicht dazu führen, dass die Gewindehülse rückwärts wieder aus dem Werkstück gezogen wird. Dabei beeinflusst die Größe der Gewindesteigung jedoch maßgeblich, wie schnell diese im Werkstoff montiert werden kann.

Ferner weist die Gewindetiefe des Gewindeprofils, das 0,03-fache bis 0,15-fache des Außendurchmessers der Gewindehülse auf. Als Gewindetiefe wird hierbei die Hälfte der Differenz zwischen Außendurchmesser der Gewindehülse, der das Gewinde mit einschließt, und dem Außendurchmesser des Kerns (ohne Außengewinde) verstanden. Mit anderen Worten ist die Gewindetiefe die Höhe des Gewindeprofil.

Auch die Gewindetiefe betreffend findet die erfindungsgemäße Gewindehülse einen Kompromiss zwischen einem Erhöhen der Zugfestigkeit der Verbindung zwischen Gewindehülse und Werkstück durch eine besonders große Gewindetiefe und dem Schaden, der dem Werkstoff, insbesondere einem Werkstoff aus Holz, durch das Eindringen in den Werkstoff zugefügt wird.

Aus dem Zusammenspiel der die Gewindehülse definierenden Werte kann eine besonders erhöhte Zugfestigkeit der Verbindung zwischen Gewindehülse und Werkstoff gewährleistet werden, da die Beeinträchtigungen bzw. Beschädigungen des Werkstücks beim Eindrehen der Gewindehülse verringert werden.

Die Gewindehülse weist bevorzugterweise einen Hohlraum auf. Dabei umfasst die Gewindehülse insbesondere einen Innenwand, die den Hohlraum der Gewindehülse, insbesondere in radialer Richtung der Gewindehülse, begrenzt.

In der Innenwand der Gewindehülse kann ein Innengewinde ausgebildet sein, das sich entlang des gesamten Hohlraums oder nur eines Teiles erstrecken kann. Dieses Innengewinde dient insbesondere der Aufnahme eines komplementären Verbindungselementes, beispielsweise einer Schraube. So handelt es sich bei der Gewindehülse selber um keine Schraube.

Der Hohlraum kann sich entlang der gesamten Länge der Gewindehülse erstrecken oder aber nur von einem stirnseitigen Ende der Gewindehülse in diese hineinragen. Bevorzugterweise erstreckt sich der Hohlraum über mindestens den Großteil der Länge der Gewindehülse. Bevorzugterweise ist der Hohlraum zylindrisch ausgebildet.

Der Hohlraum weist insbesondere zwei Unterbereiche auf. Ein erster Unterbereich, ist bevorzugterweise als Aufnahmebereich für ein Werkzeug, insbesondere einen Innensechskantschlüssel, zum Eindrehen der Gewindehülse ausgebildet. Dafür weist die Innenwand des Kerns bevorzugterweise längsachsenparallel ausgerichtete Einkerbungen auf, in die das Werkzeug greifen kann. Ein zweiter Unterbereich ist bevorzugterweise als Aufnahmebereich für ein weiteres Verbindungselement, insbesondere einer Schraube, ausgebildet. Die Gewindehülse weist im zweiten Unterbereich insbesondere ein Innengewinde zum Eindrehen des Verbindungselements auf.

Bevorzugterweise weisen der erste Unterbereich und der zweite Unterbereich jeweils eine Länge in Richtung der Längsrichtung der Gewindehülse auf, wobei die Summe der Längen im Wesentlichen die Länge der Gewindehülse beträgt. So beträgt die Summe der Längen mindestens 80 %, ferner bevorzugt mindestens 90 %, der Länge der Gewindehülse. Insbesondere besteht der Hohlraum ausschließlich aus den beiden Unterbereichen.

Ferner bevorzugt verjüngt sich die Gewindehülse an mindestens einer ihrer axialen Enden, bevorzugterweise an beiden Enden. Dabei weist der sich verjüngende Bereich einen Winkel von 45° zu einer Längsrichtung der Gewindehülse auf.

Die Steigung des Gewindes beträgt bevorzugterweise bei einem Außendurchmesser von 8 mm bis 14 mm das 0,53-fache bis 0,94-fache des Außendurchmessers der Gewindehülse und bei einem Außendurchmesser von 14 mm bis 40 mm das 0,37-fache bis 0,65-fache.

Ferner bevorzugt beträgt die Gewindetiefe über die gesamte Bandbreite der Außendurchmesser, d.h. von 8 mm bis 40 mm, das 0,04375-fache bis 0,125-fache des Außendurchmessers der Gewindehülse.

Bevorzugt beträgt der Flankenwinkel 28° bis 32°, besonders bevorzugt 29° bis 31° und nochmals bevorzugt genau 30°.

Insbesondere bei den oben angegebenen besonders bevorzugten Wertebereichen wird eine außerordentlich gute Zugfestigkeit der Verbindung zwischen Gewindehülse und Werkstück erreicht.

Bevorzugterweise beträgt das Verhältnis von Gewindetiefe zur Steigung des Gewindes 0,1 bis 0,20, bevorzugterweise 0,11 bis 0,17, über die gesamte Bandbreite der Außendurchmesser. Durch ein derart gewähltes Verhältnis kann eine besonders gute Zugfestigkeit erreicht werden.

Insbesondere weist das Gewindeprofil keine Krümmung auf, insbesondere in einem vom Kern abgewandten Bereich des Gewindeprofils. Der vom Kern abgewandte Bereich des Gewindes ist der Bereich des Gewindes, der vom Kern am meisten beabstandet ist. In einem Bereich, der in unmittelbarer Nähe zum Kern angeordnet ist, kann das Gewindeprofil eine Krümmung aufweisen. So kann der Übergang des Gewindes zum Kern gekrümmt ausgebildet sein. Das Profil des Gewindes ist insbesondere nicht als Rundgewinde ausgebildet. Bevorzugterweise weist das gesamte Gewindeprofil keine Krümmung auf, sodass die Flanken insbesondere plan ausgebildet sind. Dadurch wird eine besonders gute Schneidwirkung der Gewindehülse erreicht.

Ferner bevorzugt ist das Gewindeprofil im Wesentlichen spitz ausgebildet. Insbesondere formen die Flanken des Gewindes in dem vom Kern am meisten beabstandeten Punkt des Gewindeprofils im Wesentlichen eine Spitze. Herstellungsbedingt kann nicht immer ein perfekt spitz ausgebildetes Gewindeprofil gewährleistet sein. Zwischen den Enden der Gewindeflanken, die vom Kern der Gewindehülse abgewandt sind, kann ein Plateau entstehen, das im Wesentlichen parallel zum Kern der Gewindehülse verläuft. Dieses Plateau sollte jedoch höchstens nur 10 %, bevorzugt höchstens 5 %, ferner bevorzugt nur 3 %, des Abstandes betragen, den die Flanken zwischen ihren dem Kern zugewandten Enden, einschließen, damit ein im Wesentlichen spitz ausgebildetes Profil gegeben ist.

Ferner ist es bevorzugt, dass der Flankenwinkel entlang der gesamten Gewindetiefe konstant ist. Dies ist der Fall, wenn die Flanken des Gewindes im Gewindeprofil weder Knicke noch Rundungen aufweisen, sondern jeweils durch eine Gerade mit konstanter Geradensteigung beschrieben werden können.

Besonders bevorzugt ist die erfindungsgemäße Gewindehülse zum Eindrehen in ein Werkstück aus Holz ausgebildet. Die Gewindehülse und das Holzstück bilden im eingedrehten Zustand der Gewindehülse insbesondere ein gemeinsames System.

Besonders vorteilhaft ist, dass die erfindungsgemäße Gewindehülse das Holz bzw. die Zellstruktur des Holzes nicht verdichtet oder verpresst, sondern stattdessen nur zerschneidet. Daraus resultiert eine erheblich erhöhte Zugfestigkeit zwischen Gewindehülse und dem Werkstück aus Holz. Dieser Effekt wird weiter verstärkt durch die Holzstruktur. Holz besitzt in Längsrichtung der Jahresringe grundsätzlich eine höhere Zugfestigkeit als in Querrichtung, da die verschiedenen Jahresringe unterschiedliche Materialeigenschaften besitzen und zwischen einzelnen Jahresringen oft geringer belastbare Verbindungen bestehen. Wird durch das Einbringen einer Gewindehülse das Holz bzw. dessen Zellstruktur verpresst und somit zerstört, verringert sich der Zusammenhalt zwischen den einzelnen Jahresringen weiter und die Zugfestigkeit zwischen der Gewindehülse und dem Holzwerkstück nimmt ab.

Bevorzugterweise weist der Kern der Gewindehülse im Wesentlichen einen durchgängig konstanten Durchmesser auf. Hierbei kann sowohl der Außendurchmesser als auch der Innendurchmesser des Kerns, der zugleich Durchmesser des Hohlraums des Kerns (Schraubenaufnahmeöffnung) ist, durchgängig konstant ausgebildet sein.

Besonders bevorzugt ist die erfindungsgemäße Gewindehülse aus metallischen Werkstoffen, kann jedoch auch in Kunststoff, insbesondere Kunstfasermaterial, ausgebildet werden.

Eine bevorzugte Ausführungsform der Erfindung ist in den Figuren dargestellt, die schematisch zeigen:
- Fig. 1: eine Seitenansicht und einen Längsschnitt einer erfindungsgemäßen Gewindehülse; und
- Fig. 2: eine Draufsicht auf eine Gewindehülse gemäß Fig. 1.

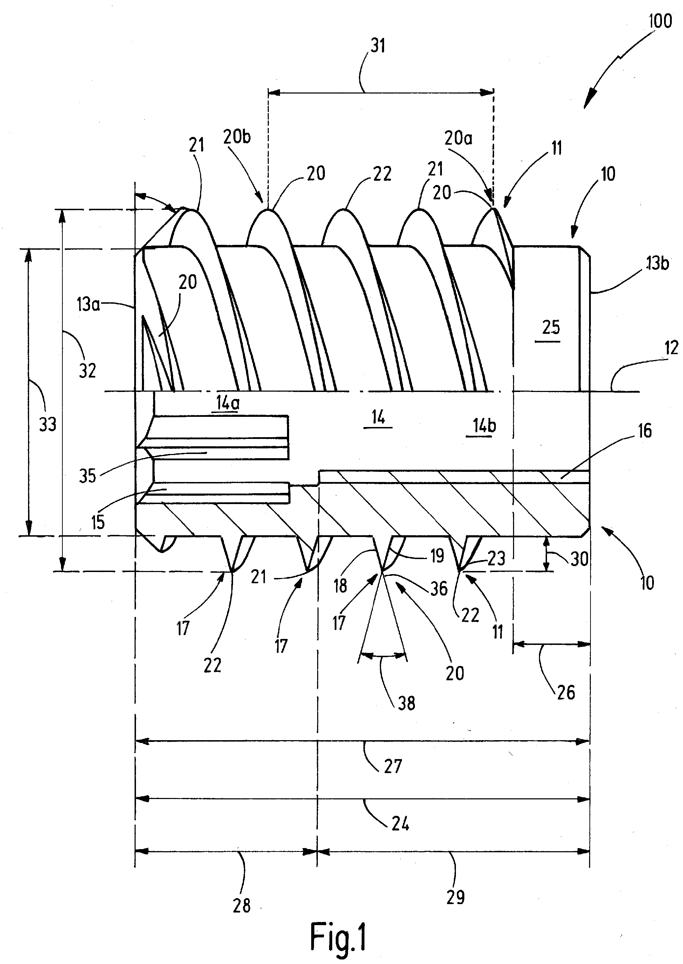

In Fig. 1 ist eine Seitenansicht und ein Längsschnitt einer erfindungsgemäßen Gewindehülse 100 der Länge 24 umfassend einen zylindrischen Kern 10 und ein außen auf dem Kern 10 angebrachtes Gewinde 11, gezeigt. Die untere Hälfte der Fig. 1 zeigt einen Schnitt entlang der Längsachse 12 der Gewindehülse 100, während auf der oberen Hälfte eine Seitenansicht der Gewindehülse 100 zu sehen ist.

Das Gewinde 11 der Gewindehülse 100 ist dreigängig ausgebildet und weist somit drei Gewindegänge 20, 21, 22 auf. In der oberen Figurenhälfte ist zu erkennen, wie sich die drei Gewindegänge 20, 21, 22 des dreigängigen Gewindes 11 wendelförmig von dem einen Ende 13b bis zum anderen Ende 13a der Gewindehülse 100 um den Kern 10 wickeln. Dabei ist ein Bereich 25, der sogenannte Führungsansatz, entlang der Länge 26 am Ende 13b der Gewindehülse 100 ausgespart. Dieser gewindefreie Bereich 25 entlang der Länge 26 dient zum senkrechten geführten Einsetzen der Gewindehülse 100 in eine Aufnahmeöffnung (hier nicht dargestellt), in die die Gewindehülse 100 eingedreht wird. Außerdem ist zu erkennen, dass sich die Gewindehülse 100 an ihren beiden Enden 13a, 13b konisch verjüngt.

In der unteren Figurenhälfte ist zu sehen, dass die abgebildete Gewindehülse 100 einen zylindrischen Hohlraum 14 aufweist, der sich von dem einen axialen Ende 13a der Gewindehülse 100 zum anderen axialen Ende 13b der Gewindehülse 100 erstreckt. So entspricht die Länge 27 des Hohlraums 14 der Länge 24 der Gewindehülse 100.

Der Hohlraum 14 weist zwei Unterbereiche 14a, 14b, und zwar einen ersten Unterbereich 14a und einen zweiten Unterbereich 14b, die sich direkt aneinander in Längsrichtung 12 der Gewindehülse 100 anschließen. Der erste Unterbereich 14a erstreckt sich entlang der Länge 28 ausgehend von dem Ende 13a der Gewindehülse 100, während der zweiten Unterbereich 14b die Länge 29 aufweist. Da sich der erste Unterbereich 14a und der zweite Unterbereich 14b direkt aneinander anschließen, entspricht die Summe der Längen 28 und 29 der Länge 24 der Gewindehülse 100.

Im ersten Unterbereich 14a ist der Hohlraum 14 als Aufnahmebereich für ein Werkzeug (hier nicht dargestellt) zum Eindrehen der Gewindehülse 100 ausgebildet. Der Kern 10 der Gewindehülse 100 weist eine Innenwand 35 auf. In die Innenwand 35 des Kerns 10 sind längsachsenparallel ausgerichtete Einkerbungen 15 ausgebildet, in die das Werkzeug greifen kann. Der als Aufnahmebereich für ein Werkzeug ausgebildete erste Unterbereich 14a des Hohlraums 14 ist hier zur Aufnahme eines Innensechskantschlüssels (hier nicht dargestellt) ausgebildet.

Im zweiten Unterbereich 14b ist der Hohlraum 14 als Aufnahmebereich für ein weiteres Verbindungselement (hier nicht dargestellt), hier einer Schraube, ausgebildet. Dafür weist die Gewindehülse 100 aus Fig. 1 ein Innengewinde 16 zum Eindrehen des Verbindungselementes auf.

In dem ersten Unterbereich 14a des Hohlraums 14 wurde durch die Herstellung des Aufnahmebereichs mit den Einkerbungen 15 auf das Innengewinde 16 verzichtet. In dem Unterbereich 14b entlang der Länge 29 liegt das Innengewinde 16 ungeschmälert vor. Das ungeschmälerte Innengewinde 16 ist in der Fig. 1 nicht wie das außen angebrachte Gewinde 11 durch ein Gewindeprofil 17 kenntlich gemacht, sondern durch die Abgrenzung eines Rechtecks mit der Länge 29 als lange Seite und der Gewindetiefe des Innengewindes 16 als kurze Seite.

In dem Längsschnitt in Fig. 1 ist das jeweils gleichartig ausgebildete Gewindeprofil 17 der drei Gewindegänge 20, 21, 22 mit deren charakteristischen Kenngrößen zu sehen.
Die Gewindetiefe 30 ist die halbe Differenz des Außendurchmessers 32 der Gewindehülse 100 und dem Außendurchmesser 33 des Kerns 10. Die Gewindesteigung 30 gibt den längsachsenparallelen Abstand zwischen den Mitten von aufeinander folgenden Gewindegangabschnitten 20a, 20b desselben Gewindeganges 20 an.

Die beiden eingezeichneten Flanken 18 und 19 des Gewindeprofils 17 bilden in diesem Ausführungsbeispiel ein gleichschenkliges Dreieck, wobei der Flankenwinkel 30° beträgt. Der am meisten vom Kern 10 beabstandete Bereich 23 des Gewindeprofils 17 ist durch die durchgängig geradlinige Form der Flanken 18 und 19 als Spitze 36 ausgebildet.

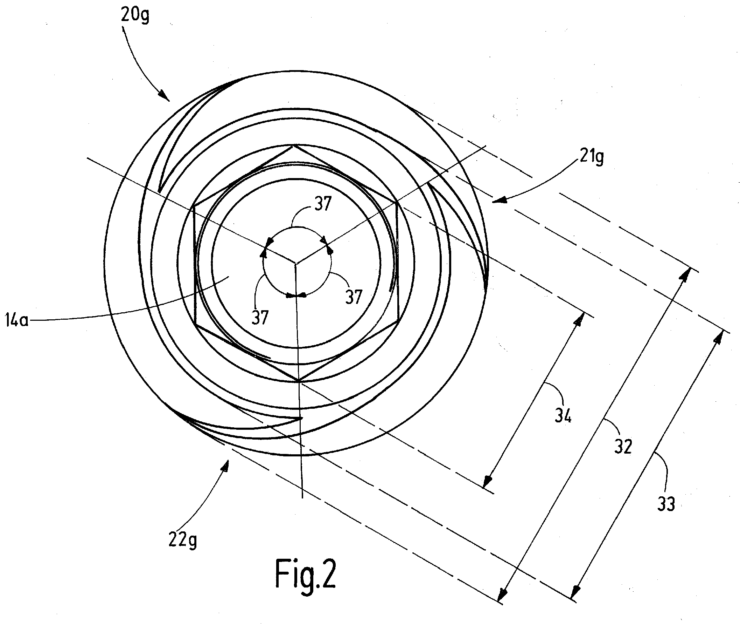

In Fig. 2 ist eine Draufsicht auf das Ende 13a der erfindungsgemäßen Gewindehülse 100 aus Fig. 1 zu sehen.

Man erkennt den als sechseckigen Aufnahmebereich ausgebildeten ersten Unterbereich 14a des Hohlraums aus Fig. 1, der zur Aufnahme eines speziellen Innensechskantschlüssels geeignet ist (hier nicht dargestellt). Während die Gewindehülse 100 einen Außendurchmesser 32 aufweist, hat der Kern 10 der Gewindehülse 100 einen kleineren Außendurchmesser 33. Das Innengewinde 16 der Gewindehülse 100 weist den Außendurchmesser 34 auf.

In Figur 2 sind ebenso die drei Gewindegänge 20, 21, 22 des Gewindes 11 zu sehen. Die drei Gewindegänge 20, 21, 22 erstrecken sich wendelförmig vom Ende 13b der Gewindehülse 100 zum gegenüberliegenden Ende 13a, ausgenommen den gewindefreien Bereich 25 entlang der Länge 26 ausgehend vom Ende 13b. Somit erkennt man in Figur 2 vor allem die Gewindeanfänge 20g, 21g, 22g der drei Gewindegänge 20, 21, 22. Der radiale Abstand 37 der Gewindegänge 20, 21, 22 beträgt 120°. Die Gewindegänge 20, 21, 22 sind somit äquidistant zueinander angeordnet.

In einer bevorzugten Ausführungsform umfassen die erfindungsgemäßen Gewindehülsen einen Außendurchmesser 32 von 8 mm bis 40 mm mit einer Steigung 31 zwischen 6 mm und 15 mm und einer Gewindetiefe 30 zwischen 1 mm und 1,75 mm.

Besonders bevorzugt sind folgende Kombinationen der Merkmale des Gewindes 11 bzw. des Gewindeprofils 17:
- bei einem Außendurchmesser 32 der Gewindehülse 100 von 8 mm:
   ∘ Steigung 31 = 6 mm bis 7,5 mm
   ∘ Gewindetiefe 30 = 1 mm
- bei einem Außendurchmesser 32 der Gewindehülse 100 von 10 mm:
   ∘ Steigung 31 = 6 mm bis 7,5 mm
   ∘ Gewindetiefe 30 = 1,25 mm
- bei einem Außendurchmesser 32 der Gewindehülse 100 von 12 mm bis 14 mm:
   ∘ Steigung: 7,5 mm
   ∘ Gewindetiefe: 1,25 mm
- bei einem Außendurchmesser 32 der Gewindehülse 100 von 16 mm:
   ∘ Steigung: 9 mm
   ∘ Gewindetiefe: 1,5 mm
- bei einem Außendurchmesser 32 von 18,5 mm bis 22 mm:
   ∘ Steigung 31 = 12 mm
   ∘ Gewindetiefe 30 = 1,5 mm
- bei einem Außendurchmesser 32 der Gewindehülse 100 von 25 mm bis 40 mm:
   ∘ Steigung 31 = 15 mm
   ∘ Gewindetiefe 30 = 1,75 mm

### Bezugszeichenliste

- 100: Gewindehülse

- 10: Kern
- 11: Gewinde
- 12: Längsachse der Gewindehülse
- 13a, 13b: Enden der Gewindehülse
- 14: Hohlraum
- 14a: Erster Unterbereiche des Hohlraums
- 14b: Zweiter Unterbereich des Hohlraums
- 15: Einkerbungen
- 16: Innengewinde
- 17: Gewindeprofil
- 18,19: Flanken des Gewindeprofils

- 20, 21, 22: Gewindegänge
- 20a, 20b: Gewindegangabschnitte
- 20g, 21g, 22g: Gewindeanfänge
- 23: vom Kern am meisten beabstandete Bereich des Gewindeprofils
- 24: Länge der Gewindehülse
- 25: Gewindefreier Bereich am Ende 13b der Gewindehülse
- 26: Länge des gewindefreien Bereichs
- 27: Länge des Hohlraums
- 28: Länge des ersten Unterbereichs
- 29: Länge des zweiten Unterbereichs

- 30: Gewindetiefe
- 31: Gewindesteigung
- 32: Außendurchmesser der Gewindehülse
- 33: Außendurchmesser des Kerns
- 34: Außendurchmesser des Innengewindes der Gewindehülse
- 35: Innenwand des Kerns
- 36: Spitze des Gewindeprofils
- 37: Radialer Abstand der Gewindegänge
- 38: Flankenwinkel

## Patentansprüche

1. Gewindehülse (100) zum Eindrehen in eine Aufnahmeöffnung eines Werkstücks, mit einem Kern (10) und einem außen auf dem Kern (10) angebrachten Gewinde (11), **dadurch gekennzeichnet,**
• **dass** das Gewinde (11) drei Gewindegänge (20, 21, 22) umfasst,
• **dass** die Gewindegänge (20, 21, 22) ein Gewindeprofil (17) aufweisen,
• **dass** das Gewindeprofil (17) einen Flankenwinkel (38) von 25° bis 35° aufweist,
• **dass** die Steigung (31) des Gewindes (11) bei einem Außendurchmesser von 8 mm bis 14 mm das 0,5- bis 1,0-fache und bei einem Außendurchmesser von größer als 14 mm bis 40 mm das 0,25- bis 0,65-fache des Außendurchmessers (32) der Gewindehülse (100) beträgt, und
• **dass** die Gewindetiefe (30) des Gewindeprofils (17) das 0,03-fache bis 0,15-fache des Außendurchmessers (32) der Gewindehülse (100) beträgt.

2. Gewindehülse (100) nach Anspruch 1,
**dadurch gekennzeichnet,**
**dass** die Steigung (31) des Gewindes (11) bei einem Außendurchmesser von 8 mm bis 14 mm das 0,53-fache bis 0,94-fache des Außendurchmessers (32) der Gewindehülse (100) und bei einem Außendurchmesser von größer als 14 mm bis 40 mm das 0,37-fache bis 0,65-fache des Außendurchmessers (32) der Gewindehülse (100) beträgt.

3. Gewindehülse (100) nach einem der vorhergehenden Ansprüche,
**dadurch gekennzeichnet,**
**dass** die Gewindetiefe (30) das 0,04375 fache bis 0,125-fache des Außendurchmessers (32) der Gewindehülse (100) beträgt.

4. Gewindehülse (100) nach einem der vorhergehenden Ansprüche,
**dadurch gekennzeichnet,**
**dass** der Flankenwinkel (38) 28° bis 32°, bevorzugt 29° bis 31°, besonders bevorzugt 30°, beträgt.

5. Gewindehülse (100) nach einem der vorhergehenden Ansprüche,
**dadurch gekennzeichnet,**
• **dass** das Verhältnis von Gewindetiefe (30) (20, 21, 22) zur Steigung (31) des Gewindes (11) 0,1 bis 0,20, bevorzugterweise 0,11 bis 0,17, beträgt.

6. Gewindehülse (100) nach einem der vorhergehenden Ansprüche,
**dadurch gekennzeichnet,**
**dass** das Gewindeprofil (17) keine Krümmung aufweist, insbesondere in einem vom Kern (10) abgewandten Bereich (23) des Gewindeprofils.

7. Gewindehülse (100) nach einem der vorhergehenden Ansprüche,
**dadurch gekennzeichnet,**
**dass** das Gewindeprofil (17) im Wesentlichen spitz ausgebildet ist.

8. Gewindehülse (100) nach einem der vorhergehenden Ansprüche,
**dadurch gekennzeichnet, dass** der Flankenwinkel (38) entlang der gesamten Gewindetiefe (30) konstant ist.

9. Gewindehülse (100) nach einem der vorhergehenden Ansprüche,
**dadurch gekennzeichnet,**
**dass** die Gewindehülse (100) zum Eindrehen in ein Werkstück aus Holz ausgebildet ist.

10. Gewindehülse (100) nach einem der vorhergehenden Ansprüche,
**dadurch gekennzeichnet,**
**dass** der Kern (10) der Gewindehülse (100) einen konstanten Durchmesser (33) aufweist.

## Claims

1. A threaded sleeve (100) for screwing into a receiving opening of a workpiece, with a core (10) and a thread (11) mounted outside on the core (10), **characterized in**
• **that** the thread (11) comprises three thread turns (20, 21, 22),
• **that** the thread turns (20, 21, 22) have a thread profile (17),
• **that** the thread profile (17) has a flank angle (38) of 25° to 35°,
• **that** with an outer diameter of 8 mm to 14 mm the pitch (31) of the thread (11) is in the range of 0.5 to 1.0 times the outer diameter (32) of the threaded sleeve (100) and with an outer diameter greater than 14 mm to 40 mm the pitch (31) of the thread (11) is in the range of 0.25 to 0.65 times the outer diameter (32) of the threaded sleeve (100), and
• **that** the thread depth (30) of the thread profile (17) is in the range of 0.03 times to 0.15 times the outer diameter (32) of the threaded sleeve (100).

2. The threaded sleeve (100) according to claim 1, **characterized in that** with an outer diameter of 8 mm to 14 mm the pitch (31) of the thread (11) is in the range of 0.53 times to 0.94 times the outer diameter (32) of the threaded sleeve (100) and with an outer diameter greater than 14 mm to 40 mm the pitch (31) of the thread (11) is in the range of 0.37 times to 0.65 times the outer diameter (32) of the threaded sleeve (100).

3. The threaded sleeve (100) according to any one of the preceding claims, **characterized in that** the thread depth (30) is in the range of 0.04375 times to 0.125 times the outer diameter (32) of the threaded sleeve (100).

4. The threaded sleeve (100) according to any one of the preceding claims, **characterized in that** the flank angle (38) is in the range of 28° to 32°, preferably in the range of 29° to 31°, particularly preferably 30°.

5. The threaded sleeve (100) according to any one of the preceding claims, **characterized, in that** the ratio of thread depth (30) (20, 21, 22) to pitch (31) of the thread (11) is in the range of 0.1 to 0.20, preferably 0.11 to 0.17.

6. The threaded sleeve (100) according to any one of the preceding claims, **characterized in that** the thread profile (17) does not have any curvature, in particular in a region (23) of the thread profile facing away from the core (10).

7. The threaded sleeve (100) according to any one of the preceding claims, **characterized in that** the thread profile (17) is substantially formed pointed.

8. The threaded sleeve (100) according to any one of the preceding claims, **characterized in that** the flank angle (38) is constant along the entire thread depth (30).

9. The threaded sleeve (100) according to any one of the preceding claims, **characterized in that** the threaded sleeve (100) is adapted for screwing into a workpiece of wood.

10. The threaded sleeve (100) according to any one of the preceding claims, **characterized in that** the core (10) of the threaded sleeve (100) has a constant diameter (33).

## Revendications

1. Douille filetée (100) destinée à être vissée dans un orifice de logement d'une pièce d'oeuvre, avec une âme (10) et un filetage (11) appliqué à l'extérieur sur l'âme (10),
**caractérisée**
• **en ce que** le filetage (11) comprend trois spires (20, 21, 22),
• **en ce que** les spires (20, 21, 22) présentent un profil de filet (17),
• **en ce que** le profil de filet (17) présente un angle de filet (38) de 25° à 35°,
• **en ce que** pour un diamètre extérieur de 8 mm à 14 mm, le pas (31) du filetage (11) s'élève à de 0,5 à 1,0 fois et pour un diamètre extérieur supérieur à 14 mm et de jusqu'à 40 mm, il s'élève à de 0,25 à 0,65 fois le diamètre extérieur (32) de la douille filetée (100) et
• **en ce que** la profondeur de filet (30) du profil de filet (17) s'élève à de 0,03 fois à 0,15 fois le diamètre extérieur (32) de la douille filetée (100).

2. Douille filetée (100) selon la revendication 1,
**caractérisée en ce que** pour un diamètre extérieur de 8 mm à 14 mm, le pas (31) du filetage (11) s'élève à de 0,53 fois à 0,94 fois le diamètre extérieur (32) de la douille filetée (100) et pour un diamètre extérieur supérieur à 14 mm à de jusqu'à 40 mm, il s'élève à de 0,37 fois à 0,65 fois le diamètre extérieur (32) de la douille filetée (100).

3. Douille filetée (100) selon l'une quelconque des revendications précédentes,
**caractérisée en ce que** la profondeur de filet (30) s'élève à de 0,04375 fois à 0,125 fois le diamètre extérieur (32) de la douille filetée (100).

4. Douille filetée (100) selon l'une quelconque des revendications précédentes,
**caractérisée en ce que** l'angle de filet (38) s'élève à de 28° à 32°, de préférence à de 29° à 31°, de manière particulièrement préférée à 30°.

5. Douille filetée (100) selon l'une quelconque des revendications précédentes,
**caractérisée en ce que**
• le rapport de la profondeur de filet (30) (20, 21, 22) au pas (31) du filetage (11) s'élève à de 0,1 à 0,20, de manière la plus préférée à de 0,11 à de 0,17.

6. Douille filetée (100) selon l'une quelconque des revendications précédentes,
**caractérisée en ce que** le profil de filet (17) ne présente aucun cintrage, notamment dans une zone (23) du profil de filet qui est opposée à l'âme (10).

7. Douille filetée (100) selon l'une quelconque des revendications précédentes,
**caractérisée en ce que** le profil de filet (17) est sensiblement conçu sous forme pointue.

8. Douille filetée (100) selon l'une quelconque des revendications précédentes,
**caractérisée en ce que** l'angle de filet (38) est constant le long de l'ensemble de la profondeur de filet (30).

9. Douille filetée (100) selon l'une quelconque des revendications précédentes,
**caractérisée en ce que** la douille filetée (100) est conçue pour être vissée dans une pièce d'oeuvre en bois.

10. Douille filetée (100) selon l'une quelconque des revendications précédentes,
**caractérisée en ce que** l'âme (10) de la douille filetée (100) présente un diamètre (33) constant.
